Europäisches Patentamt

European Patent Office

Office européen des brevets

(11) Numéro de publication: **0 401 117**
**A1**

## (12) DEMANDE DE BREVET EUROPEEN

(21) Numéro de dépôt: **90401461.0**

(22) Date de dépôt: **31.05.90**

(51) Int. Cl.5: **A23L 1/10, A21D 13/02**

(30) Priorité: **02.06.89 FR 8907301**

(43) Date de publication de la demande:
**05.12.90 Bulletin 90/49**

(84) Etats contractants désignés:
**AT BE CH DE DK ES FR GB GR IT LI LU NL SE**

(71) Demandeur: **Socété Anonyme dite: AGRO INDUSTRIE RECHERCHES ET DEVELOPPEMENTS**
**27-29 rue Chateaubriand**
**F-75383 Paris(FR)**

(72) Inventeur: **Naudin, Olivier**
**3, rue des Remparts, Bétheniville**
**F-51110 Bazancourt(FR)**
Inventeur: **Villemont, Pascal**
**96 Avenue Claude Debussy**
**F-03100 Montluçon(FR)**
Inventeur: **de Baynast, Régis**
**35, rue de l'Hermitage**
**F-78000 Versailles(FR)**
Inventeur: **Regnault, Alain**
**17, Avenue de Viarmes**
**F-60260 Le Lys la Morlaye(FR)**

(74) Mandataire: **Bourgognon, Jean-Marie et al**
**Cabinet Flechner 22, Avenue de Friedland**
**F-75008 Paris(FR)**

(54) Procédé de préparation de son de blé désamylacé et déphytisé et produit obtenu.

(57) Le procédé consiste à mélanger du son de blé de granulométrie donnée à de l'eau et à séparer les particules de son désamylacées de l'eau et des particules d'amidon.

Ces particules de son sont reprises dans une eau acidulée afin de donner, après séparation, des particules de son désamylacées sensiblement exemptes d'acide phytique.

EP 0 401 117 A1

Xerox Copy Centre

La présente invention a trait aux procédés de préparation de son de blé désamylacé et déphytisé et aux produits obtenus par ces procédés.

Le son de blé est actuellement la source de fibre diététique la plus communément employée. C'est aussi la matière première la plus étudiée sur le plan nutritionnel et son effet bénéfique sur le transit intestinal et les affections liées aux troubles de ce transit a été prouvé par des essais cliniques ou par des études épidémiologiques. Cependant, chez certains individus, des consommations élevées de son de blé peuvent induire des effets secondaires (irritation des muqueuses, complexation de calcium par l'acide phytique).

Du point de vue de la mise en oeuvre, le son de blé présente trois inconvénients :
- la faible teneur en fibres (45 %) en nécessitant l'incorporation de quantités très importantes, au risque de déséquilibrer la formulation originelle,
- la faible capacité de rétention d'eau et la faible mouillabilité, en limitant l'utilisation à des formulations sèches,
- le goût et l'arome caractéristiques de céréale, en limitant l'utilisation dans certains types de formulations, lactées par exemple.

Au US-A-3.852.504, on décrit un procédé de préparation, que l'on prétend applicable aux sons de céréales, mais qui, en fait, s'applique aux sons de riz et de soja, qui sont riches en huiles mais pauvres en acide phytique. Leur teneur en acide phytique est de 3 à 5 fois moindre que celle du son de blé. Le document antérieur propose d'extraire la phytine du son de riz en le mettant en contact avec de 2 à 10 fois son volume d'eau acidulée à la température ambiante. On récupère ensuite encore de l'amidon en traitant par de l'eau (1 à 4 fois le volume). L'expérience montre que cette technique ne donne pas de bons résultats avec du son de blé. La déphytisation est insuffisante et requiert de très grandes quantités d'acide consommé en partie par les minéraux et autres substances salifiables du son de blé. Le marc, destiné d'ailleurs à servir d'aliment pour le bétail, n'a qu'une teneur médiocre en fibres.

L'invention vise un procédé qui permet d'obtenir un son de blé à teneur en fibres diététiques significativement plus élevée, à valeur calorifique plus faible et à capacité de rétention d'eau plus élevée que le son de blé habituel et qui, en outre, a une teneur très faible en acide phytique et qui est dépourvu de goût et de l'arôme caractéristiques de céréales crues, en consommant aussi peu d'acide que possible.

L'invention a donc pour objet un procédé tel que défini à la revendication 1.

Comme l'opération de désamylation précède celle de déphytisation, la plupart des substances salifiables, qui, à l'exception des phytates, sont solubles dans l'eau, sont éliminées dans la première opération et ne provoquent plus une surconsommation d'acide à l'opération suivante.

On utilise un son de blé grossier, non broyé dont la granulométrie est comprise entre 0,8 et 1,5 mm. Le son est alors mélangé avec 10 à 15 fois son poids d'eau froide.

Il n'est pas judicieux de travailler sur un son préalablement broyé, c'est-à-dire avec une forte proportion de particules de taille inférieure à 0,200 mm car la séparation de ces particules et des grains d'amidon (0,050 mm) devient plus difficile.

Compte tenu de la capacité de rétention d'eau du son (5 à 7), il est pratiquement impossible de travailler avec moins de 10 volumes d'eau par poids de son. Au-delà de 15 volumes d'eau par poids de son, la separation solide-liquide et matière en suspension doit se faire en deux étapes (tamis vibrant ou grille courbe suivie de presse).

Si l'on travaille à une température trop élevée (50-75° C), par exemple voisine du point de gélification de l'amidon, on obtient un résultat opposé au but recherché, qui est d'enlever l'amidon granulaire par mise en suspension dans l'eau.

De préférence, le son est soumis à une pression au moins égale à $2.10^5$ Pascal pour effectuer la séparation de l'amidon. Le pressage du son de blé ainsi imprégné de 10 à 15 fois son volume d'eau peut s'effectuer avec des presses à vis, des filtres presses ou avec tout autre équipement permettant d'exprimer un jus à partir d'un marc humide ; on a préféré, pour obtenir un traitement rapide et continu, adopter des presses à vis hélicoïdale à section libre décroissante, de l'entrée à la sortie, dotées de tamis à fentes transversales, perpendiculaires à l'axe de la presse ; la largeur des fentes (0,16 à 0,18 mm) est inférieure à la taille des particules de son (0,20 mm) et supérieure à celle des grains d'amidon (0,05 mm). En général, on effectue la séparation dans un appareil de séparation dont la dimension de mailles est comprise entre 100 et 500 microns et, de préférence, entre 150 microns et 300 microns.

La pression de gavage des presses est de 0,1 à $0,2.10^5$ Pascal, et la pression maximale à laquelle est soumis le son dans la partie la plus étroite est de $5.10^5$ Pascal à $6.10^5$ Pascal. La majeure partie de l'amidon (90 %) est éliminée sous forme d'un lait d'amidon contenant 20 à 25 g/l d'amidon en suspension, 1 à 2 g/l de sucres solubles, 5 à 7 g/l de protéines, peptides et aminoacides solubles et 5 à 10 g/l de particules de fibres intérieures à 0,2 mm.

La composition du son de blé ainsi lavé et pressé diffère significativement de celle de son utilisé comme matière première (tableau 1).

Tableau 1

| Composition d'un son de blé avant et après lavage à l'eau et pressage | | |
|---|---|---|
| Composition (sur ms) | Son | Son lavé |
| Fibres AOAC | 45-50 % | 75-80 % |
| Amidon | 20-25 % | 3-5 % |
| Protéines | 18-20 % | 10-12 % |
| Cendres | 4- 5 % | 2- 4 % |
| Acide phytique | 1,2-1,5 % | 1,5-1,7 % |

Le rendement pondéral de cette opération est compris entre 0,62 et 0,58 kg/kg de son engagé.

La seconde opération consiste à reprendre le son désamylacé par lavage et pressage et à le remettre en suspension dans 15 à 20 volumes d'eau chaude (T<90°C) maintenue entre pH 1 et 3,5 par addition d'un acide minéral ou organique susceptible de déplacer les sels de l'acide phytique.

Cette opération nécessite 5 à 15 minutes de temps de contact.

Les essais dont les résultats sont reproduits dans le tableau 2 montrent que le pH est le facteur décisif sur le taux d'extraction de l'acide phytique alors que la température a peu d'influence, pourvu cependant qu'elle soit comprise entre 70 et 90°C. Comme le montre l'exemple comparatif dans lequel on déphytise à la température ambiante, la solubilisation des phytates devient très incomplète quand la température s'abaisse.

Tableau 2

| Influence de la température, de la durée et du pH sur l'extraction de l'acide phytique | | | | | |
|---|---|---|---|---|---|
| | Temp. + C | pH | Durée (mn) | % d'acide phytique | Rendement (en %) |
| Référence | - | - | - | 1,31 | 100 |
| Essai 1 | 90° | 8,0 | 30 | 1,24 | 61 |
| Essai 2 | 90° | 8,0 | 15 | 1,30 | 59,5 |
| Essai 3 | 90° | 3,5 | 30 | 0,14 | 58,5 |
| Essai 4 | 90° | 3,5 | 15 | 0,23 | 61 |
| Essai 5 | 70° | 8,0 | 30 | 1,45 | 60 |
| Essai 6 | 70° | 8,0 | 15 | 1,27 | 60 |
| Essai 7 | 70° | 3,5 | 30 | 0,20 | 62 |
| Essai 8 | 70° | 3,5 | 15 | 0,13 | 60,5 |

Les essais réalisés à pH très acide (pH<1,0) conduisent à une solubilisation significative non seulement des protéines mais des hémicelluloses, constituants importants de la fraction fibre et que l'on cherche à conserver pour leurs propriétés tant fonctionnelles que diététiques. Les essais réalisés à pH supérieur à 4,0 ne permettent pas une extraction suffisante.

L'extraction de l'acide phytique à une température comprise entre 70°C et 90°C permet d'éliminer la majeure partie des substances caractéristiques de l'arôme et du goût de céréale crue du son.

Le son ainsi traité est ensuite pressé soit dans une presse à vis, soit dans un filtre-presse ou dans tout autre équipement permettant d'exprimer l'eau, jusqu'à ce que sa teneur en eau soit inférieure à 65 % en poids, puis séché dans un sécheur à air chaud à une température comprise entre 70° et 90°C.

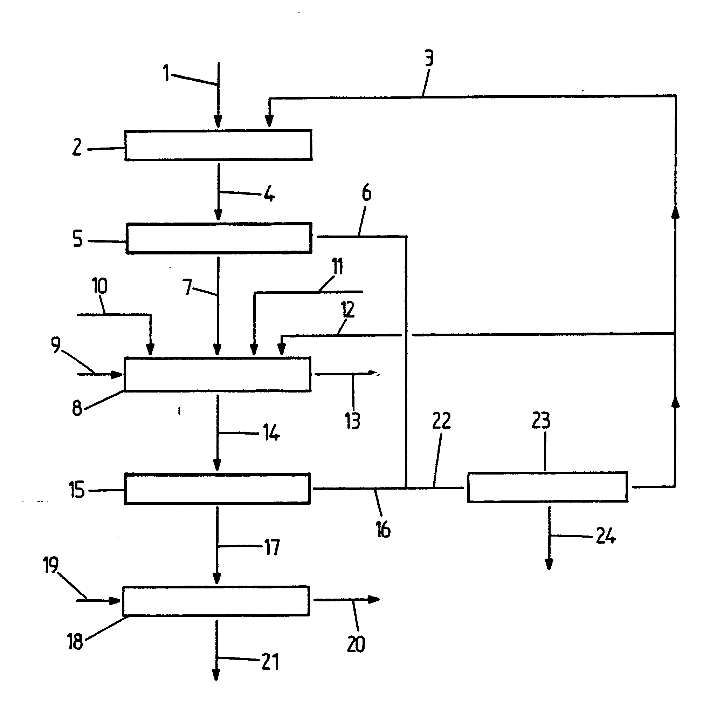

Le procédé de préparation suivant l'invention est illustré à la figure unique du dessin annexé.

Du son arrive, par un conduit 1, dans un mélangeur 2 qui reçoit, par un conduit 3, du jus décanté recyclé. Le mélange de son et de jus décanté parvient, par un conduit 4, à une presse 5 qui sépare le mélange en un jus sortant par un conduit 6 et en un marc sortant par une ligne 7. Le marc arrive dans un second mélangeur 8 auquel on envoie de la vapeur d'eau par un conduit 9, de l'eau par un conduit 10, de l'acide sulfurique par un conduit 11 et du jus décanté recyclé par un conduit 12. Du mélangeur 8 des buées sont évacuées par un conduit 13. Le mélange issu du mélangeur 8 va, par une ligne 14, à une presse 15. Celle-ci sépare le mélange en un jus sortant par un conduit 16 et en un marc envoyé par une ligne 17 à un séchoir 18. De la vapeur d'eau est envoyée dans le séchoir 18 par un conduit 19. Il en sort, outre des buées par un conduit 20, des fibres de son suivant l'invention, par une ligne 21. Les conduits 6 et 16 se réunissent en un conduit 22 menant à une décanteuse 23 qui sépare de l'amidon rejeté par une ligne 24 et du jus décanté recyclé par le conduit 3 au mélangeur 2 et par le conduit 12 au mélangeur 8.

Les exemples suivants illustrent l'invention.


## EXEMPLE 1


La séquence des opérations auxquelles est soumis le son est celle de la figure unique.

100 kg de blé grossier et non broyé d'une humidité de 13 % en poids et dont la composition est donnée dans le tableau 4, sont dispersés sous agitation mécanique dans 1500 litres d'eau froide. L'agitation est maintenue pendant 20 minutes, puis le contenu du bac est introduit dans la trémie de gavage d'une presse à vis hélicoïdale. On recueille 115 kg d'un son lavé à 45 % de matière sèche (dont la composition est donnée dans le tableau 3) et 1485 litres d'un lait d'amidon à 23,5 g/litre de matière sèche totale dont 15 g/litre d'amidon.

Tableau 3

| Composition de son de blé au cours des différentes étapes de traitement | | | |
|---|---|---|---|
| Composition traitement | Avant traitement | Après lavage | Après traitement |
| (% sur ms) | (%) | (%) | acide (%) |
| Amidon | 26,5 | 3 | 2 |
| Protéines | 18,0 | 10 | 10 |
| Fibres | 49 | 84 | 85 |
| Acide phytique | 1,35 | 1,5 | 0,15 |
| Cendres | 5 | 3 | 3 |

Les 115 kg de son lavé humide sont repulpés sous agitation mécanique avec 750 litres d'eau préalablement portés à 80°C. On ajuste alors le pH à 3,5 avec 0,32 kg d'acide sulfurique concentré (98 %).

L'agitation est maintenue pendant 10 minutes, puis le contenu du bac est introduit de nouveau dans la trémie de gavage d'une presse à vis hélicoïdale. On recueille 112 kg d'une fibre de son de blé à 45 % de matière sèche qui est ensuite séchée dans un sécheur à air co-courant à lit fluidisé, l'énergie de séchage étant fournie par de la vapeur à 12 bar (160°C) pour l'enveloppe du sécheur et par de l'air à 135°C pour l'air de fluidisation.

On obtient une fibre de son de blé dont les caractéristiques physico-chimiques sont significativement différentes de celles du son de blé utilisé comme matière première comme le montre le tableau 4.

Tableau 4

| Composition et caractéristiques physico-chimiques du son de blé et de son de blé désamylacé | | |
|---|---|---|
| Composition | Son de blé | Son de blé désamylacé |
| Humidité | 13 % | 10 % |
| Composition (% su sec) | | |
| Amidon | 26,5 % | 2 % (<3 %) |
| Protéines | 18,0 % | 10 % (<12 %) |
| Cendres | 5 % | 3 % |
| Acide phytique | 1,35 % | 0,15 % |
| Fibres AOAC | 49 | 85 % (>80 %) |
| Capacité de rétention d'eau | 5 g/g | 10 g/g |
| Capacité d'échange d'ions (meq/g) | 0,1 meq/g | 0,13 meq/g |
| Goût | Céréale | Neutre |
| Arôme | Céréale | Neutre |

La teneur en fibres diététiques a été mesurée selon la méthode officielle AOAC (Association of Official Analytical Chemists) publiée par PROSKY. L. Etal, J. Assoc. off Anal. Chem., (1984), 67, 1044-1052.

La capacité de rétention d'eau est déterminée selon le protocole suivant :
• placer un tamis (maille de 0,5 mm environ) dans un cristallisoir et remplir ce dernier avec de l'eau jusqu'à mi-hauteur du tamis,
• égoutter le tamis pendant 5 minutes (PO),
• remettre le tamis dans le cristallisoir,
• ajouter 10 g de fibres (P),
• laisser reposer 20 minutes,
• égoutter le tamis pendant 5 minutes,
• peser (P1).

La capacité de rétention d'eau (CRE) en g/g est égale à :
$$CRE \ (g/g) = ((P1-PO) - P)/P$$

La capacité d'échange d'ions est déterminée selon le protocole suivant.

On disperse 2,500 g de fibres broyées sèches (P) dans 250 ml d'acide chlorhydrique 0,1 M, on maintient sous agitation pendant 16 heures, puis on filtre, on rince avec 5 x 200 ml d'eau distillée, on sèche (100 °C pendant 12 heures) et on pèse (P1). 1.000 g de fibres mises sous forme acide sont dispersées dans 50 ml d'eau distillée, et le pH de la suspension est ramené à 70 par addition de KOH 0,1 N (volume V).

La capacité d'échange de cations (CEC) en milliéquivalent par gramme de fibres (meq/g) est :
$$CEC = V \times 0,1 \ meq/g$$

## EXEMPLE 2

On opère exactement comme décrit dans l'exemple 1, mis à part que le deuxième traitement à l'eau chaude est réalisé à pH = 6 au lieu de pH = 3,5, c'est-à-dire sans addition d'acide.

La fibre de son ainsi obtenue après séchage a toutes les caractéristiques de celles obtenues au terme du traitement décrit à l'exemple 1, sauf que sa teneur en acide phytique (1,50 %) n'a pas varié de façon significative par rapport au produit de départ.

La fibre de son ainsi produite n'a ni le goût ni l'arôme caractéristique du son de blé.

## EXEMPLE 3

On opère exactement comme décrit dans l'exemple 1, mis à part que le deuxième traitement est réalisé dans l'eau froide et non plus dans l'eau chaude, mais à pH = 3,5 avec addition d'acide.

La fibre de son ainsi obtenue après séchage a la composition et les caractéristiques physico-chimiques (y compris une faible teneur en acide phytique) de celle obtenue au terme du traitement décrit à l'exemple 1, si ce n'est qu'elle a conservé le goût et l'arôme caractéristique du son de blé.

## EXEMPLE 4

Pour réaliser un pain à haute teneur en fibre de son de blé (17 % par rapport à la matière sèche), on a adopté la composition suivante :

| | |
|---|---|
| - Farine | 800 g |
| - Fibre de son de blé broyée (60 $\mu$m) | 200 g |
| - Eau | 700 g |
| - Gluten | 40 g |
| - Levure | 30 g |
| - Sel | 20 g |

Les ingrédients sus-mentionnés sont ensuite mélangés, pétris et cuits dans les conditions suivantes :

| | |
|---|---|
| - Temps de pétrissage | 20 minutes |
| - Temps de pointage | 30 minutes |
| - Temps d'apprêt | 2 heures |
| - Température de la pâte | 25 °C |
| - Température du four | 220 °C |
| - Temps de cuisson | 25 minutes |

Des pains préparés selon la formule et les conditions décrites ci-dessus se comparent avantageusement au pain classique au son, tout en présentant une teneur en fibre diététique plus élevée (17 % par rapport à la matière sèche).

La levée de la pâte, la structure, la texture et l'apparence du pain résultant sont très satisfaisantes.

## EXEMPLE COMPARATIF

On reprend l'exemple 1 du US-A-3.852.504, si ce n'est que l'on traite 100 g de son de blé au lieu de 100 g de son de riz. La centrifugation s'effectue à 1000 g pendant 5 minutes. Après décantation, on obtient 106 g d'eau. On sèche à l'air chaud pendant 20 minutes à 80 °C. On donne au tableau 5 ci-dessous les résultats de l'analyse du son de blé avant traitement, du son de blé traité par le procédé suivant l'invention et du son de blé traité suivant l'exemple comparatif. Les teneurs sont indiquées en pourcentage pondéral sur sec.

Tableau 5

|  | Avant traitement | Traitement suivant l'invention | Traitement selon US-A-3.852.504 |
|---|---|---|---|
| Protéine | 14,5 % | 7,8 % | 13,9 % |
| Acide phytique | 1,60 % | 0,2 % | 1,72 % |
| Fibres AOAC | 49 % | 82 % | 65 % |
| Consommation relative d'acide $H_2SO_4$ |  | 1,0 fois | 4,0 fois |

**Revendications**

1. Procédé de préparation de son de blé déphytisé et désamylacé qui consiste à effectuer une déphytisation par de l'eau acidulée à un pH de 1 à 3,5 et une désamylation par de l'eau à une température inférieure à 50° C,
caractérisé en ce qu'il consiste,
à effectuer l'opération de désamylation avant l'opération de déphytisation,
l'opération de désamylation s'effectuant sur du son de blé de granulométrie comprise entre 0,8 et 1,5 mm que l'on mélange à plus de 10 fois son volume d'eau jusqu'à obtention d'un mélange aqueux de particules de son désamylacées et de particules d'amidon de plus petites dimensions que les particules de son désamylacées, les particules de son désamylacées étant ensuite séparées de l'eau et des particules d'amidon,
l'opération de déphytisation s'effectuant sur les particules de son désamylacées en les reprenant par 15 à 20 fois leur volume d'eau acidulée à une température de 70 à 90° C pendant au moins cinq minutes et en séparant les particules de son sensiblement exemptes d'acide phytique de l'eau acidulée.

2. Procédé suivant la revendication 1, caractérisé en ce qu'il consiste à effectuer la séparation dans un appareil de séparation à mailles dont la dimension des mailles est comprise entre 100 microns et, de préférence, entre 150 et 300 microns.

3. Procédé suivant la revendication 2, caractérisé en ce qu'il consiste à soumettre le mélange aqueux pendant la séparation à un pressage sous une pression au moins égale à $2.10^5$ Pascal.

4. Procédé suivant l'une des revendications 1 à 3, caractérisé en ce qu'il consiste à sécher les particules de son désamylacées à une température comprise entre 70° et 90° C.

5. Son de blé comprenant, outre 10 % en poids environ d'humidité, en pourcentages pondéraux, moins de 3 % d'amidon, de 12 à 10 % de protéines; de 5 à 3 % de cendres et plus de 80 % de fibres, et ayant une capacité de rétention d'eau de 10 g/g et une capacité d'échange d'ion de 0,13 meq/g, et une couleur et un arôme neutres.

6. Son de blé suivant la revendication 5, caractérisé en ce qu'il contient moins de 0,2 % en poids d'acide phytique.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 852 504 (SHIGOTOSHI MIHARA) * Revendications; colonne 2, lignes 1-59 * --- | 1,2,5 | A 23 L   1/10 A 21 D   13/02 |
| A | JOURNAL OF FOOD SCIENCE, vol. 47, no. 3, mai-juin 1982, pages 1296-1297; A.L. CAMIRE et al.: "Interactions of soluble iron with wheat bran" * Page 1296, alinéa 7 * --- | 1 | |
| A | US-A-3 788 861 (J.R. BURST) * Revendications 1,11; colonne 9, lignes 26-32 * --- | 2,5 | |
| A | US-A-1 842 933 (B.W. DEDRICK) * Revendication 1; page 1, ligne 85 - page 2, ligne 21 * --- | 1-3,4,5 | |
| A | JOURNAL OF FOOD SCIENCE, vol. 52, no. 4, juillet-août 1987, pages 1600-1603; S.M. DAGHER et al.: "Preparation of high bran Arabic bread with low phytic acid content" * Page 1600, colonne 2, alinéa 2; page 1601, colonne 1, alinéa 3; tableau 2 * ----- | 1,6 | DOMAINES TECHNIQUES RECHERCHES (Int. Cl.5) A 23 L A 21 D C 08 B |

Le présent rapport a été établi pour toutes les revendications

| Lieu de la recherche | Date d'achèvement de la recherche | Examinateur |
|---|---|---|
| LA HAYE | 07-09-1990 | VUILLAMY V.M.L. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
..........................................................................
& : membre de la même famille, document correspondant

EPO FORM 1503 03.82 (P0402)